# EUROPEAN PATENT APPLICATION

(11) **EP 1 710 697 A1**
(43) Date of publication of application: **11.10.2006**
(21) Application number: 06007126.3
(22) Date of filing: 04.04.2006
(51) Int. Cl.: G06F 9/445

(54) **Method and apparatus for executing application in system having NAND flash memory**

(30) Priority: 06.04.2005 KR 20050028576
(71) Applicant: Samsung Electronics Co., Ltd., Yeongtong-gu Suwon-si, Gyeonggi-do (KR)
(72) Inventor: Moon, Byoung-Seoup, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is an apparatus for executing an application, which includes a Read Only Memory (ROM) including a data storage area, the ROM storing an application code in a memory area for storing non-executable data, a Random Access Memory (RAM) including a heap memory area required when an application is executed, an application installation module for installing the application code in the data storage area when a predetermined condition occurs, and an application execution module for loading the application code installed in the data storage area into the heap memory area and executing the application code.

## Description

The present invention relates to a method and apparatus for executing an application in a system having a NAND flash memory.

With the recent developments in information terminal technology, a small system has increasingly used a flash memory as a small permanent storage memory. A flash memory, which has low power consumption, is miniaturized and can permanently store data, and may be classified as a NAND type memory and a NOR type memory. A NAND flash memory has a low price and high degree of integration, but does not basically support an Executable in Place (XIP) function, in comparison with a NOR flash memory. An XIP function enables a program to be directly executed on a flash memory instead of loading the program into a Random Access Memory (RAM).

Accordingly, an apparatus using a NAND flash memory is limited in that_it must copy a code having the same capacity as that of an executable code into a RAM and execute the copied code in the RAM for booting, in order to execute the executable code. Since a NAND flash memory has a low price and high degree of integration in comparison with a NOR flash memory, it achieves high capacity and high processing speed in terms of hardware. Therefore, use of a NAND flash memory is increasing in mobile terminals, etc., and products employing a NAND flash memory are rapidly increasing.

In other words, a NAND flash memory provides only a scheme of a block unit in a basic I/O. Further, a NAND flash memory has relatively high writing speed and high degree of integration in comparison with a NOR flash memory, but cannot support an XIP function. Accordingly, in order to store an executable code in a NAND flash memory and use it as an executable Read Only Memory (ROM), it is necessary to use a scheme in which the executable code is copied into a RAM area of the same size and is executed in the RAM.

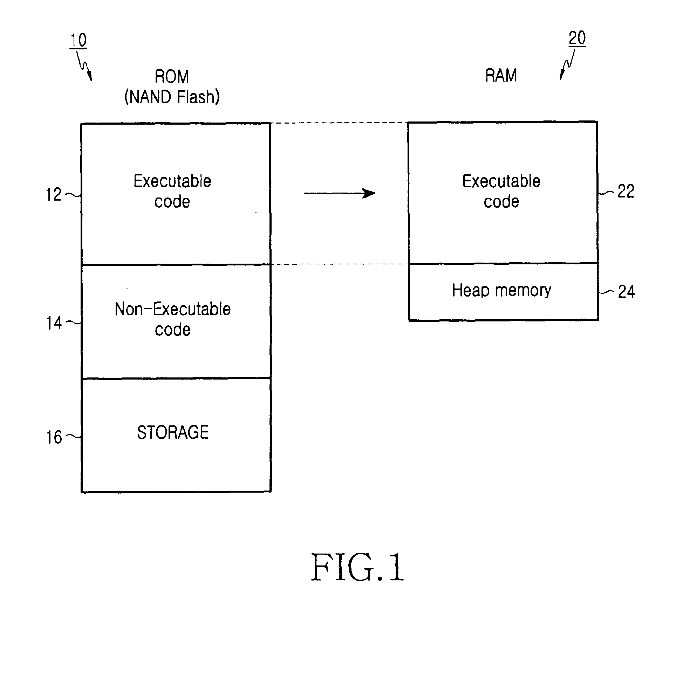

Hereinafter, a conventional scheme for executing an executable code according to applications in the NAND flash memory will be described with reference to FIG. 1. Referring to FIG. 1, the NAND flash memory 10 includes an area 12 for storing the executable code and an area 14 for storing a non-executable code such as resource data. Further, the NAND flash memory 10 includes a storage area 16 for storing user data, etc. The storage area 16 is used as a database and stores data input by a user, data downloaded by the user, etc. This storage area 16 may be formatted for initialization. In order to execute the executable code stored in the NAND flash memory 10, it is necessary to provide an area 22, which has the same size as that of the area 12 for storing the executable code, in a RAM 20. Accordingly, when booting is performed, an application execution module copies the executable code stored in the NAND flash memory 10 into the area 22 of the RAM 20 and executes the executable code in the RAM 20.

Likewise, in order to use the NAND flash memory 10 as a basic ROM, the area 22 for executing the executable code is always necessary. Therefore, additional storage capacity of the RAM 20 is required and additional cost is generated. Moreover, the cost per degree of integration is more expensive in the RAM 20 than that in a flash memory. Accordingly, when the NAND flash memory 10 is used as the ROM as described above, advantages obtained by using the NAND flash memory 10 are offset by additional requirements for RAM capacity. Therefore, it is difficult to acquire a price advantage.

The present invention has been made to solve the above-mentioned problems occurring in the prior art.

It is the object of the present invention to provide a method and an apparatus for storing an executable program in a flash memory and executing the executable program using the flash memory as an executable ROM, without using an additional RAM.

This object is solved by the subject matter of the independent claims.

Preferred embodiments are defined in the dependent claims.

Therefore, the present invention can decrease the use of a high-priced RAM, thereby reducing the volume and the cost of a system.

In order to accomplish the aforementioned object, according to one aspect of the present, there is provided an apparatus for executing an application, the apparatus including a Read Only Memory (ROM) including a data storage area, the ROM storing an application code in a memory area for storing non-executable data; a Random Access Memory (RAM) including a heap memory area required when an application is executed; an application installation module for installing the application code in the data storage area when a predetermined condition occurs; and an application execution module for loading the application code installed in the data storage area into the heap memory area and executing the application code when the application code is executed.

The present invention will be more apparent from the following detailed description taken in conjunction with the accompanying drawings, in which:
FIG. 1 is a diagram illustrating a conventional scheme for executing an executable code in a NAND flash memory;
FIG. 2 is a diagram illustrating an apparatus for executing an application according to an embodiment of the present invention;
FIG. 3 is a flow chart illustrating the operation of an application installation module according to one embodiment of the present invention; and
FIG. 4 is a flow chart illustrating the operation of an application execution module according to one embodiment of the present invention.

Hereinafter, a preferred embodiment according to the present invention will be described with reference to the accompanying drawings. In the following description of the present invention, a detailed description of known functions and configurations incorporated herein will be omitted when it may make the subject matter of the present invention unclear.

The present invention provides a method capable of largely reducing costs associated with the need for a high-priced Random Access Memory (RAM) by preventing all executable codes from being loaded into the RAM as in the prior art while using a NAND flash memory with a low price and high capacity.

For this purpose, the present invention does not store a part corresponding to an executable code in a Read Only Memory (ROM) code area, but stores the executable code part in a resource area or an area not included in an extra RAM. Then, the present invention copies the stored part into an internal file system for installation for initial booting. Further, the present invention loads the executable code copied into the file system into a heap memory of a RAM and executes the executable code when execution of the executable code copied into the file system is requested. According to the present invention, it is not always necessary to store the executable code in the RAM, so that the RAM space can be saved.

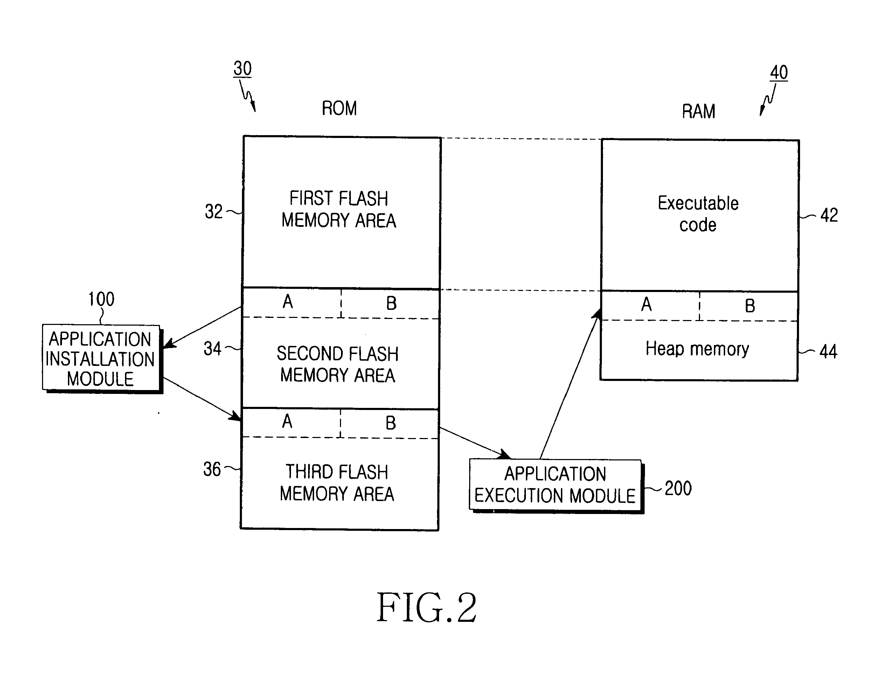

FIG. 2 is a diagram of an apparatus for executing an application according to an embodiment of the present invention. Referring to FIG. 2, the apparatus includes an application installation module 100, a ROM 30, an application execution module 200, and a RAM 40.

The ROM 30 may include a NAND flash memory according to the present invention. The ROM 30 includes a first flash memory area 32 for storing an executable code, a second flash memory area 34 for storing non-executable data, and a third flash memory area 36 for storing user data, etc.

The second flash memory area 34 is used for storing built-in data such as images and sound, and stores an executable code. For example, in FIG. 2, the second flash memory area 34 stores an executable code corresponding to an application A and an executable code corresponding to an application B, although the present invention is not limited to these executable codes. That is, the second flash memory area 34 can store executable codes for additional applications. The executable code corresponding to the application A and the executable code corresponding to the application B are copied into the third flash memory area 36 by the application installation module 100 for installation when booting is performed. The third flash memory area 36 is a storage area used as a database, etc. Further, the third flash memory area 36 may be a file system. Accordingly, when the file system is formatted, the data stored in the third flash memory area 36 are deleted.

The application installation module 100 determines if the application code stored in the second flash memory area 34 is stored (i.e., has been installed) in the third flash memory area 36 at a time when an operating system is booted. For example, the application installation module 100 has a list of applications which must be installed in the third flash memory area 36, and can determine if executable codes for these applications have been installed in the third flash memory area 36 when booting is performed. If the application code has not been installed in the third flash memory area 36, the application installation module 100 copies the application code stored in the second flash memory area 34 into the third flash memory area 36 for installation. This application code may be installed in a specific area of the third flash memory area 36 as a file or a database. Further, the application installation module 100 registers the application installed in the third flash memory area 36 in the application execution module 200 for managing applications.

Then, when the application installed in the third flash memory area 36 is executed, the application execution module 200 can load the application code stored in the third flash memory area 36 into a heap memory 44 of the RAM 40 and execute the application code. The heap memory 44 is a memory assigned to the RAM 40 in order to provide a memory space required when an application is executed. In detail, the heap memory 44 of the RAM 40 into which the application code stored in the third flash memory area 36 is loaded is a memory used only when the application is executed. That is, the heap memory 44 is a memory capable of being reused when another application is executed after the heap memory 44 is automatically released at the end of an application. The RAM 40 includes an area 42 for storing executable codes, and this area 42 has the same size as that of the first flash memory area 32 in the ROM 30.

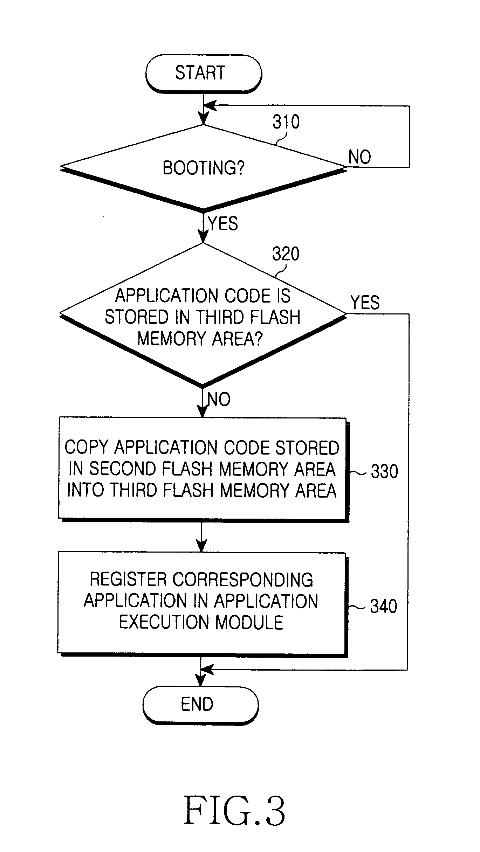

The application installed in the third flash memory area 36 may be used by a user without any difference from the application of the existing executable code storage area 32. Further, it is not always necessary to store the executable code in the RAM, so that the RAM can be saved. Hereinafter, the operation of the application installation module 100 will be described with reference to FIG. 3.

FIG. 3 is a flow diagram illustrating the operation of the application installation module 100 according to one embodiment of the present invention. Referring to FIG. 3, in step 310, the application installation module 100 determines if an operating system is being booted. In addition, the application installation module 100 can determine if formatting is being performed. When the formatting is being performed, steps 320, 330 and 340 may also be performed.

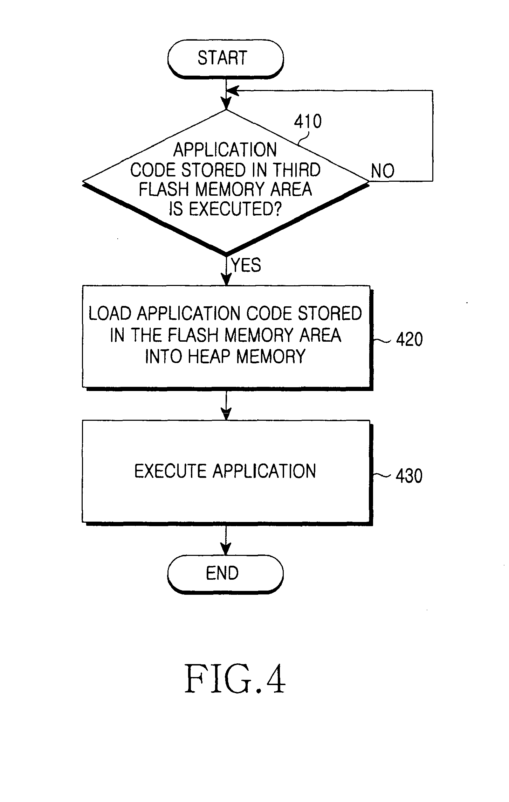

When the operating system is being booted, step 320 is performed. In step 320, the application installation module 100 determines if the application code stored in the second flash memory area 34 of the ROM 30 is stored (i.e., has been installed) in the third flash memory area 36. If it has been installed, the process ends. If the application code that must be installed in the third flash memory area 36 is not stored, step 330 is performed. In step 330, the application installation module 100 copies the application code stored in the second flash memory area 34 into the third flash memory area 36 and installs the copied application code. This application code may be installed in a specific area of the third flash memory area 36 as a file or a database as described above. In step 340, the application installation module 100 registers the application installed in the third flash memory area 36 in the application execution module 200 for managing applications. Hereinafter, the operation of the application execution module 200 will be described with reference to FIG. 4.

Referring to FIG. 4, in step 410, the application execution module 200 determines if execution of the application installed in the third flash memory area 36 is requested. If the execution of the application installed in the third flash memory area 36 is requested, step 420 is performed. In step 420, the application execution module 200 loads the application code stored in the third flash memory area 36 into the heap memory 44 of the RAM 40. In step 430, the application execution module 200 executes the corresponding application. That is, the application execution module 200 can load the application code stored in the third flash memory area 36 into the heap memory 44 of the RAM and execute the application code. As described above, the heap memory 44 is a memory used only when an application is executed, which is a memory capable of being reused when another application is executed after the heap memory 44 is automatically released at the end of an application. In FIG. 2, the executable codes corresponding to the applications A and B are loaded into the heap memory 44 and executed.

In the meantime, the application execution module 200 may be constructed by integrating a launcher for managing application information and a loader of an operating system for loading an application into the heap memory.

According to the present invention as described above, when a NAND flash memory is used as an executable ROM, the NAND flash memory is usually loaded into a storage and then is loaded into a RAM only in execution, in contrast with the existing scheme in which a RAM of the same size is always necessary. Therefore, the use of a high-priced RAM can be reduced. As a result, the unit cost of a product can be significantly reduced.

While the present invention has been shown and described with reference to certain preferred embodiments thereof, it will be understood by those skilled in the art that various changes in form and details may be made therein without departing from the scope of the invention as defined by the appended claims.

## Claims

1. An apparatus for executing an application, the apparatus comprising:
a ROM including a data storage area, the ROM storing an application code in a memory area for storing non-executable data;
a RAM including a heap memory area required when an application is executed;
an application installation module for installing the application code in the data storage area when a predetermined condition occurs; and
an application execution module for loading the application code installed in the data storage area into the heap memory area and executing the application .

2. The apparatus as claimed in claim 1, wherein the application installation module determines if the application code has been installed in the data storage area when the predetermined condition occurs, and installs the application code in the data storage area if the application code has not been installed in the data storage area.

3. The apparatus as claimed in claim 1 or 2, wherein the predetermined condition includes one of booting of an operating system and formatting of the data storage area.

4. A method for executing an application in apparatus including a ROM and a RAM, the ROM including a data storage area and storing an application code in a memory area for storing non-executable data, the RAM including a heap memory area required when an application is executed, the method comprising the steps of:
installing the application code in the data storage area when a predetermined condition occurs; and
loading the application code installed in the data storage area into the heap memory area and executing the application.

5. The method as claimed in claim 4, wherein the installing step comprises:
determining if the application code has been installed in the data storage area when the predetermined condition occurs; and
installing the application code in the data storage area if the application code has not been installed in the data storage area.

6. The method as claimed in claim 4 or 5, wherein the predetermined condition includes one of booting of an operating system and formatting of the data storage area.
